(19) **Europäisches Patentamt**

**European Patent Office**

**Office européen des brevets**

(11) Veröffentlichungsnummer: **0 255 061 B1**

(12) **EUROPÄISCHE PATENTSCHRIFT**

(45) Veröffentlichungstag der Patentschrift: **13.05.92**

(21) Anmeldenummer: **87110747.0**

(22) Anmeldetag: **24.07.87**

(51) Int. Cl.5: **B03B 9/06, B65G 25/08**

(54) **Abfallsortier- und -aufbereitungsanlage.**

(30) Priorität: **31.07.86 DE 3625972**

(43) Veröffentlichungstag der Anmeldung:
**03.02.88 Patentblatt 88/05**

(45) Bekanntmachung des Hinweises auf die
Patenterteilung:
**13.05.92 Patentblatt 92/20**

(84) Benannte Vertragsstaaten:
**AT CH DE FR GB LI NL SE**

(56) Entgegenhaltungen:
**US-A- 3 595 389**
**US-A- 3 680 719**
**US-A- 3 923 149**
**US-A- 4 130 195**
**US-A- 4 461 606**

(73) Patentinhaber: **Becker, Heinrich**
**Augustin-Wibbelt-Strasse 16**
**W-4250 Bottrop(DE)**

(72) Erfinder: **Becker, Heinrich**
**Augustin-Wibbelt-Strasse 16**
**W-4250 Bottrop(DE)**

(74) Vertreter: **Bauer, Wulf, Dr.**
**Wolfgang-Müller-Strasse 12**
**W-5000 Köln 51 (Marienburg)(DE)**

## Beschreibung

Die Erfindung bezieht sich auf eine Abfallsortier- und -aufbereitungsanlage mit einem Bunkerdosiergerät, einer nachgeschalteten Sortieranlage und einer Aufbereitungsanlage, bei der das Bunkerdosiergerät einen Behälter, eine auf dem Behälterboden angeordnete Fördereinrichtung und eine Aufschließtrommel hat.

Mit einer derartigen Anlage wird Müll, beispielsweise Industriemüll oder Hausmüll, der nach Anlieferung zunächst zwischengelagert wird, einzeln aufgeschlossen und aufbereitet, nach Materialien sortiert und der verbleibende Rest zu einem Brennstoff brikettiert. Die Aufgabe des Bunkerdosiergerätes ist es, den in größeren Mengen, also chargenweise anfallenden Müll so zu fördern und dosieren, daß er vereinzelt auf einem Förderband den weiteren Stationen, also insbesondere der Sortierstation, sogeführt werden kann und dabei die einzelnen Teile des Mülls nicht übereinander, sondern nebeneinander auf dem Förderband liegen. Die Aufschließ- oder Aufreißtrommel des Bunkerdosiergerätes hebt einerseits den Müll vom Behälterboden in eine gewisse Höhe, so daß er auf eine Fördereinrichtung fallen kann, andererseits hat diese Trommel die Aufgabe, Verpackungen, Müllsäcke und dergleichen aufzureißen und das Material insgesamt soweit zu verkleinern, daß es stückweise auf der Fördereinrichtung Platz hat und transportiert werden kann.

Ein Problem bei derartigen Bunkerdosiergeräten ist die Förderung des in den Behälter eingefüllten Mülls zur am Behälterende angeordneten Aufschließtrommel hin. Überlicherweise wird der Müll zunächst anderweitig zwischengelagert und dann mit Transportgeräten, beispielsweise einem Radlader, in den Behälter des Bunkerdosiergerätes eingefüllt. Hierzu ist dieser Behälter an der der Aufschließtrommel gegenüberliegenden Stirnseite offen, typischerweise ist der Behälter auch oben offen. Die Förderung des Mülls muß so erfolgen, daß die entsprechende Fördereinrichtung stets zuverlässig und sicher arbeitet. Bei der Müllverarbeitung ist der anfallende Rohstoff Müll im Vornherein nicht bekannt, insofern sind an die Fördereinrichtungen hohe Aufgaben gestellt, denn unabhängig von dem jeweils im speziellen Arbeitstakt anfallenden Müll muß die Fördereinrichtung sicher und zuverlässig arbeiten, dabei den auf ihr angehäuften Müllberg langsam und richtig dosiert der Aufschließtrommel zuleiten, ohne daß es zu einem Stillstand durch Verstopfungen, Versperrung, Müllteile oder dergleichen kommt. Die Aufgabe dieser Fördereinrichtung besteht darin, der mit radial vorspringenden Zähnen ausgerüsteten Trommel soviel Material zuzuführen, daß diese ausreichend Müllmaterial entlang ihres Umfanges nach oben durch ein Gatter feststehender Zähne transportieren kann und die bereits beschriebene, hinter ihr befindliche Fördereinrichtung gleichmäßig mit nebeneinander liegenden (nicht übereinander liegenden) Müllteile beschickt.

Als Fördereinrichtung innerhalb des Bunkerdosiergerätes sind bisher Bandförderer eingesetzt worden, diese haben sich aber nicht bewährt.

Aufgabe der Erfindung ist es daher, die Nachteile des bekannten Bunkerdosiergerätes zu vermeiden und die bekannten Bunkerdosiergeräte dahingehend weiterzuentwickeln, daß die Fördereinrichtung funktionssicher und zuverlässig bei beliebig anfallendem Müll arbeitet.

Diese Aufgabe wird ausgehend von der Abfallsortier- und -aufbereitungsanlage der eingangs genannten Art dadurch gelöst, daß die Fördereinrichtung drei Schubförderer aus jeweils einem in Längsrichtung des Behälters verlaufendem, sich nahezu über die gesamte Behälterlänge erstreckendem Tragteil und an diesem seitlich befestigten, paarweise und in gleichen Abständen untereinander angeordneten, im Profil sägezahnförmigen Mitnehmerrippen aufweist, und daß jeder Schubförderer über einen Schubantrieb in Längsrichtung des Behälters hinund herbewegbar angeordnet ist, wobei die beiden äußeren Schubförderer untereinander im Gleichtakt, gegenüber dem mittleren Schubförderer aber in Gegentakt geschaltet sind, und daß die Mitnehmerrippen so am Tragteil angeordnet sind, daß zum Verklemmen neigende Müllteile nach oben angehoben werden.

Diese drei länglichen Schubförderer bedecken unter Freilassung eines gegenseitigen Abstandes praktisch den gesamten Boden des Behälters des Bunkerdosiergerätes. Sie sind auf dem Boden längsverschiebbar angeordnet. Die eigentliche Förderwirkung geht von den im Profil sägezahnförmigen Mitnehmerrippen aus, die soangestellt sind, daß ihre steilere Flanke der Aufschließtrommel zugewandt ist. Durch die Hin- und Herbewegung sowie die sägezahnförmige Ausbildung der Rippen wird ein Verklemmen der gesamten Fördereinrichtung durch Müllteile praktisch ausgeschlossen. Da sich die Mitnehmerrippen unmittelbar oberhalb des Behälterbodens befinden, können auch keine Teile zwischen die Mitnehmerrippen und den Boden gelangen. Sollte dies jedoch einmal der Fall sein, so läßt sich ein Stillstand des entsprechenden Schubförderers dennoch vermeiden. Aufgrund der schräggestellten Flächen der Mitnehmerrippen werden Teile, die zum Verklemmen neigen, nach oben angehoben.

Erfindungsgemäß wird somit insgesamt eine sehr zuverlässig arbeitende Fördereinrichtung erhalten, die auch bei schwierigen und komplizierten Müllteilen nicht zum Verklemmen oder Verstopfen neigt.

In Weiterbildung der Erfindung wird vorgeschlagen, die Tragteile der drei Schubförderer aus U- oder Hutprofilen zu fertigen, die auf am Behälterboden befestigte Führungsprofile von oben aufgelegt sind. Hierdurch wird eine sehr robuste Seitenführung der Tragteile erhalten und es ergibt sich die Möglichkeit, daß die Tragteile sich, um eine Verklemmung mit einem Müllgegenstand zu vermeiden, etwas gegenüber dem Boden anheben können.

Vorzugsweise sind die Mitnehmerrippen flacher als die Tragteile und sind aus einem L-Profil und einem plattenförmigen Teil gebildet, das den nach unten offenen Bereich des L-Profils abschließt und zugleich gegenüber beiden Schenkeln des L-Profils in Behälterlängsrichtung vorsteht. Diese Anordnung verbessert die Fördereigenschaften und verhindert ein Verklemmen oder Festhaken der gesamten Fördereinrichtung.

Der Antrieb der drei Schubförderer erfolgt über Hydraulikzylinder, jedem Schubförderer ist ein einzelner Zylinder zugeordnet. Die Hydraulikzylinder sind auf der Längsachse der Tragteile angeordnet und bewirken somit direkt die Verschiebebewegung der einzelnen Tragteile. Ihr Hub ist kleiner als der lichte Abstand der paarweise angeordneten Mitnehmerrippen. Sie sind an der der Aufschließtrommel gegenüberliegenden, oben offenen Stirnwand des Behälters und an den ihnen benachbarten Endbereichen der Tragteile angelenkt, so daß die Tragteile etwas nach oben und unten ausweichen können, ohne daß sich eine derartige Bewegung direkt auf die Zylinder auswirkt. Die geschilderte Anordnung der Zylinder und Tragteile ermöglicht einen unmittelbaren Kraftantrieb ohne Zwischenteile.

In bevorzugter Ausbildung der Erfindung ist der Behälterboden gegenüber der Horizontalen geringfügig geneigt, beispielsweise in einem Winkel 3° angestellt. Dies hat den Vorteil, daß im Müll enthaltene Flüssigkeiten in einem definierten Bereich aus dem Behälter heraustreten, vorzugsweise steigt der Behälterboden zur Aufreißtrommel hin an.

Die Aufreißtrommel selbst hat an ihrem Zylindermantel entlang einer Schraubenlinie angeordnete Aufreißzähne, die an mit der Trommel selbst verbundenen Vorsprüngen lösbar befestigt sind. Hierdurch wird eine gleichmäßige Belastung des Antriebs der Trommel erzielt und erreicht, daß die Aufreißzähne der Trommel ausgetauscht werden können, falls sie verschlissen oder gebrochen sind. Vorzugsweise werden Zähne verwandt, die an zwei gegenüberliegenden Endbereichen Aufreißflächen haben, so daß bei Abnutzung einer Fläche der Zahn lediglich gewendet werden muß und die andere Fläche benutzt werden kann. Entsprechend sind auch die Zähne des feststehenden, mit dem Behälter verbundenen Gatters austauschbar und wendbar ausgeführt, es sind zudem mindestens zwei Leisten vorgesehen, an denen diese feststehenden Zähne alternativ befestigt werden können, so daß die optimale Zerkleinerungs-, Aufreiß- und Vereinzelungswirkung erreicht wird.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser zeigen:

Fig. 1      eine Draufsicht auf die in einer Halle untergebrachte Abfallsortier- und -aufbereitungsanlage,

Fig. 2      eine Seitenansicht der Anlage gemäß Fig. 1,

Fig. 3      ein Schnitt entlang der Schnittlinie III-III in Fig. 2,

Fig. 4      ein Schnitt entlang der Schnittlinie IV-IV in Fig. 2,

Fig. 5      einen Längsschnitt durch ein Bunkerdosiergerät,

Fig. 6      ein Querschnitt durch das Bunkerdosiergerät im Bereich der Welle der Trommel und

Fig. 7      eine Draufsicht auf einen Teilbereich der auf dem Behälterboden angeordneten Fördereinrichtung.

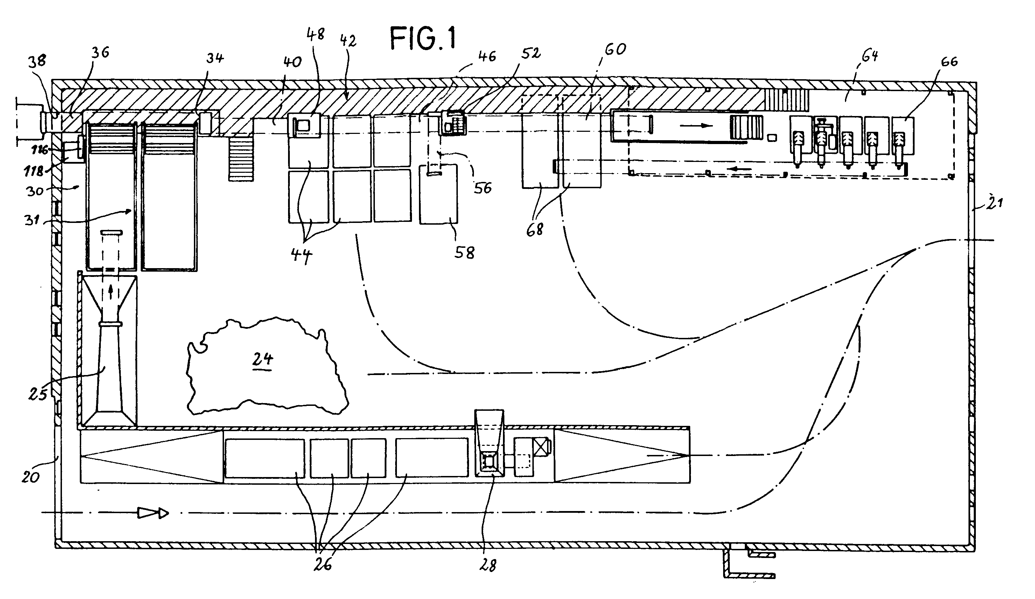

Die in einer Halle untergebrachte Abfallsortier- und -aufbereitungsanlage ist über zwei Hallentore zugänglich, dabei dient das Hallentor 20 als Einfahrt, das Hallentor 21 als Ausfahrt. Typische, aber nicht zwangsweise notwendige Wege für einen LKW 22, Raderlader oder dergleichen sind strichpunktiert in Fig. 1 eingezeichnet. Der Müll wird durch das Hallentor 20 zunächst in den Bereich einer Vorsortierung 24 gebracht und gelagert, von dort aus werden Gummi-, Glas-, Eisenschrott und Holzteile in entsprechende Container 26 gegeben, den Abschluß bildet ein Papiersammler mit Ballenpresse 28.

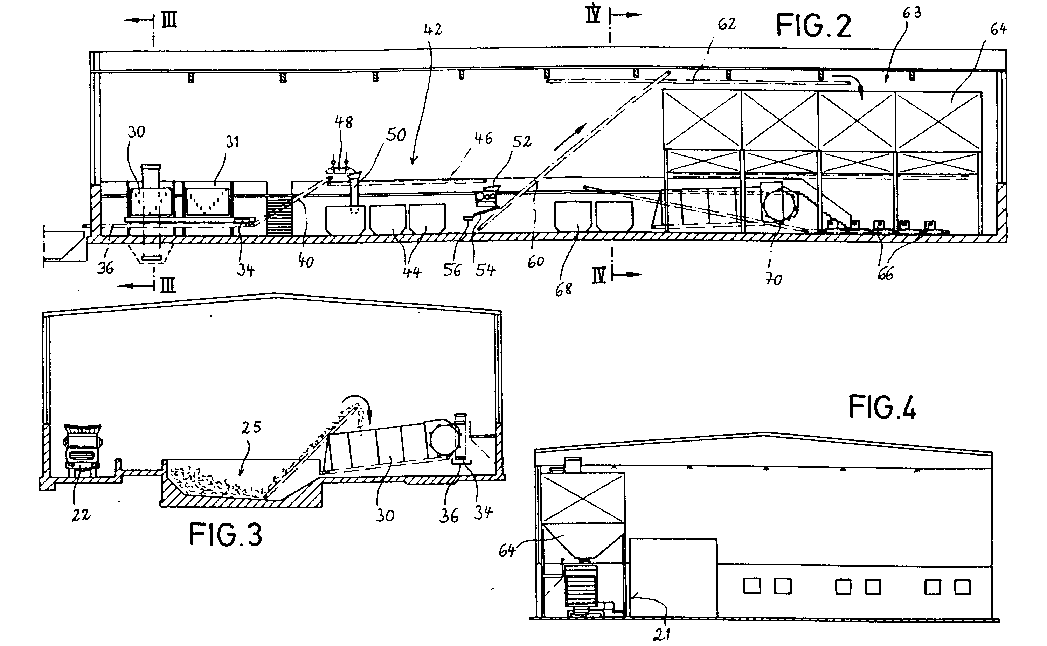

Der im Bereich der Vorsortierung 24 verbliebene Müll wird mittels eines Radladers oder aus einem Vorratsbereich 25 und über ein Förderband (siehe Fig. 3) in ein von insgesamt zwei Bunkerdosiergeräten transportiert. Auf diese Geräte wird weiter unten ausführlich eingegangen. Aus diesem gelangt der zerkleinerte und vereinzelte Abfall auf eine Vibrorinne 34, die in der Darstellung gemäß Fig. 1 nach rechts fördert. Sie hat eine Vielzahl kleiner Öffnungen, durch die mineralische Bestandteile nach unten auf ein unter ihr befindliches Austragsband 36 fallen. Dieses fördert in Gegenrichtung zur Vibrorinne 34 und transportiert die mineralischen Bestandteile durch eine Öffnung 38 nach außen in einen nicht näher dargestellten Container.

Das nicht durch die Sieböffnungen der Vibrorinne 34 gefallene, grobkörnigere Material gelangt auf ein Steigband 40 und gelangt in den Bereich der Sortierstation 42. Diese ist, wie insbesondere Fig. 2 zeigt, zweietagig aufgebaut. Die obere Etage ist eine Arbeitsbühne, die untere Etage nimmt verschiedene Container 44 auf, die ähnliche Aufgaben wie die Container aus dem Bereich der Vorsortierung 24 haben. Zahlenmäßig sind zwei zusätzliche Container 44 vorhanden, die zusätzlichen Container sind für Nichteisenmetalle und für Hart-PVC bestimmt. Andere Container können - je nach Notwendigkeit - eingesetzt werden. Die zweietagige Ausbildung hat den Vorteil, daß die auf der oberen Arbeitsbühne ausselektierten Teile direkt über Schüttrutschen oder dergleichen nach unten in den Container 44 fallen können.

Im Bereich der Sortierstation 42 fällt der noch verbliebene Müll auf ein waagerecht verlaufendes Sortierband 46, Unmittelbar im Bereich der Übergabestelle beider Bänder 40, 46 befindet sich oberhalb dieser ein Überbandmagnet 48, der ferromagnetische Teile anzieht, in diesem Zustand ein Stück in Richtung der Arbeitsrichtung des Sortierbandes 46 transportiert und oberhalb einer Schüttrutsche 50 wieder freigibt, so daß sie in einen zugeordneten Container für FE-Schrott fallen können. Die weitere Sortierung im Bereich der Arbeitsbühne geschieht per Hand, Mitarbeiter, die sich beidseits des Sortierbandes 46 befinden, lesen Einzelteile aus Gummi, Nichteisenmetallen, Hart-PVC, Glas oder Holz vom Sortierband 46 und werfen sie durch entsprechende Schüttrutschen oder direkt in die unter ihnen befindlichen Container 44.

Der noch verbliebene Müll fällt vom Sortierband 46 in einen Mulcher 52. Unter diesem befindet sich eine schräg angestellte Vibrorinne 54, durch die mit Ausnahme grobkörnig bleibender Schwermetalle praktisch das gesamte verbliebene, stark zerkleinerte (gemulchte) Abfallmaterial hindurchfällt. Die Schwermetallteile gelangen von der Vibrorinne 54 auf ein quer verlaufendes Sammelband für Schwermetalle und von dort in einen Behälter 58.

Das verbliebene, gemulchte Abfallmaterial fällt auf ein zweites Steigband 60 und wird von dort bis kurz unter das Dach der Halle gefördert, wo es auf ein Austrageband 62 fällt, das so verschoben werden kann, daß einzelne Bereiche eines unter dem rechten Ende des Austragebandes 62 befindlichen Puffersilos 64 gefüllt werden können (siehe Pfeil). Dieses Material wird später, worauf hier nicht im einzelnen eingegangen wird, je nach seinem eigenen Brennwert mit einem Brennstoff, beispielsweise Kohlenstaub, Rinde oder dergleichen vermischt und in Pressen 66 zu strangförmigen Briketts gepreßt, die in Brikettbunkern 68 zwischengelagert werden. Dabei gelangt, wie insbesondere Fig. 1 zeigt, das aus den Pressen 66 austretende Material über ein Förderband 70 in die Brikettbunker 68.

Einzelheiten der Anlage, insbesondere die Bunkerdosiergeräte 30, 31, werden nun im folgenden eingehend beschrieben.

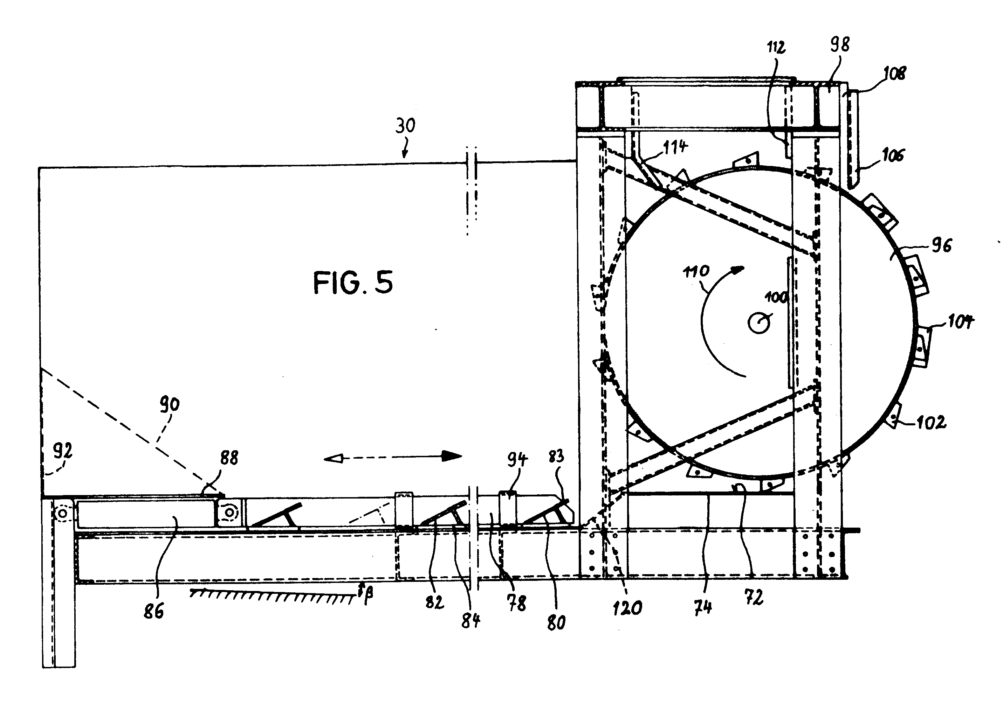

Das in Fig. 1 linke Bunkerdosiergerät 30 ist für Industriemüll bestimmt, das etwas breitere, rechte Bunkerdosiergerät 31 ist für Hausmüll vorgesehen. Im folgenden wird das linke Bunkerdosiergerät 30 beschrieben. Es ist insgesamt etwa 15 Meter lang, 2,7 Meter breit und 2,2 Meter hoch. Der Boden 72 ist, wie Fig. 5 zeigt, um den Winkel $\beta = 3°$ gegenüber der Horizontalen geneigt angeordnet und steigt vom linken Endbereich zum rechten Endbereich (in Fig. 5), an. Der Boden 72 wird durch ein Traggerüst aus I-Profilträgern und einer darüberliegenden, durchgehenden, dichten Platte 74 gebildet. Auf diese sind in Längsrichtung des Behälters des Bunkerdosiergeräts 30 verlaufend insgesamt drei Führungsprofile 76 aufgeschweißt, die jeweils als I-Profilträger ausgeführt und als H angeordnet sind. Sie werden von hutprofilförmigen Tragteilen 78 übergriffen und überdeckt, deren Profil so bemessen ist, daß oben und jeweils seitlich ein Spalt von wenigen Millimetern freibleibt. Die Führungsprofile 76 führen die Tragteile 78 und ermöglichen eine Bewegung in Längsrichtung der Tragteile 78 auf den feststehenden Führungsprofilen 76. Die Tragteile sind insgesamt 8,10 Meter lang, an ihnen sind acht Paare von im Profil sägezahnförmigen Mitnehmerrippen 80 seitlich im rechten Winkel angeordnet, die Gesamtbreite eines Paars beträgt 90 cm. Jede einzelne Mitnehmerrippe 80 ist aus einem L-Profil 82 und einer Platte 84 gefertigt, die am freien Ende der Mitnehmerrippe 80 bündig abschließen, in der Breite überragt die Platte 84 das Maß der Hypothenuse des L-Profils 82 etwas, so daß die Platte 84 von oben sichtbar ist. Die Platten 84 liegen unmittelbar auf dem Boden 72 auf und rutschen über diesen. Der kürzere Schenkel des L-Profils ist nach vorn gerichtet, der längere, hintere Schenkel wird beidseitig durch jeweils einen trapezförmigen Zahn 83 (Fig. 5 und 7) geradlinig nach vorn verlängert, er bildet eine außenliegende Spitze aus. Bei einer Hin- und Herbewegung eines aus einem Tragteil 78 und acht Paaren Mitnehmer bestehenden Schubförderers sorgen insbesondere die Zähne 83 für einen Transport ohne Verklemmung. Bei der Rückbewegung rutscht das Material über die flacher angestellten Oberseiten der Zähne 83 und des längeren Schenkels des L-Profils 82.

Jedem der insgesamt drei Schubförderer ist ein Schubantrieb 86 in Form eines Hydraulikzylinders zugeordnet, der das jeweilige Tragteil 78 geradlinig nach hinten verlängert und einerseits am Endbereich des Tragteils 78, andererseits an der weiter oben offenen Stirnwand des Bunkerdosiergerätes 30 angelenkt ist. Sein Außendurchmesser entspricht der Höhe der Profile der Tragteile 78, wie Fig. 5 zeigt. Die Schubantriebe 86 sind etwa 1 Meter lang, ihr Hub beträgt 55 cm und ist damit kleiner als der lichte Abstand der paarweise angeordneten Mitnehmerrippen 80 voneinander, der 80 cm beträgt. Im Ausführungsbeispiel nach Fig. 5 sind die drei Schubantriebe 86 durch ein Riffelblech 88 nach oben hin abgedeckt und dadurch vor Verschmutzung und möglicherweise sperrenden Teilen aus dem Müll geschützt. In einer anderen Ausführung, die in Fig. 5 gestrichelt eingezeichnet ist, befindet sich eine schräg angeordnete Platte 90 oberhalb der drei Schubantriebe 86, vorn ist eine vertikale Platte 92 angeordnet. Die so gebildete dreieckförmige Anordnung verhindert, daß sich Müll im Bereich oberhalb der Schubantriebe 86 ansammeln kann.

Um zu vermeiden, daß sich die einzelnen Tragteile 78 zu weit nach oben von ihren Führungsprofilen 76 abheben können, sind Schellen 94 vorgesehen, die die Tragteile 76 U-förmig und mit Spiel frei umgreifen. Sie sind seitlich auf der Platte 74 des Bodens 72 aufgeschweißt.

Beim praktischen Betrieb erfolgt die Hin- und Herbewegung der drei Schubförderer aufgrund des Antriebes durch ihre Schubantriebe 86 dergestalt, daß die beiden äußeren Schubförderer gleiche Bewegungen durchführen, also zu gleichen Zeitpunkten ihre vordere bzw. ihre hintere Endposition erreichen. Der mittlere Schubförderer arbeitet hierzu im Gegentakt, er erreicht seine vorderste Endposition dann, wenn die beiden äußeren Schubförderer in ihrer rückwärtigen Position sind. In Figur 5 ist dies dadurch angedeutet, daß der außenseitig liegende, in der Figur sichtbare Schubförderer in seiner vordersten, also ausgefahrenen Position ist. In dieser Position reicht er, wie auch die anderen Schubförderer, nicht bis zu der lotrecht unterhalb der Trommel 96 liegenden Fläche des Bodens 72. Die Tragteile 78 sind an ihren vorderen, oberen Kanten abgeschrägt, dort stehen die Zähne 83 über. Etwa vor der vordersten Position der Schubförderer beginnt eine im Boden 72 vorgesehene, schräg verlaufende Stufe 120, die bis in die von der Trommel 96 überdeckte Fläche reicht (siehe Fig. 5). Sie verläuft in einem Winkel von etwa 45° und hat eine Höhe, die etwa der Profilhöhe der Tragteile 78 entspricht.

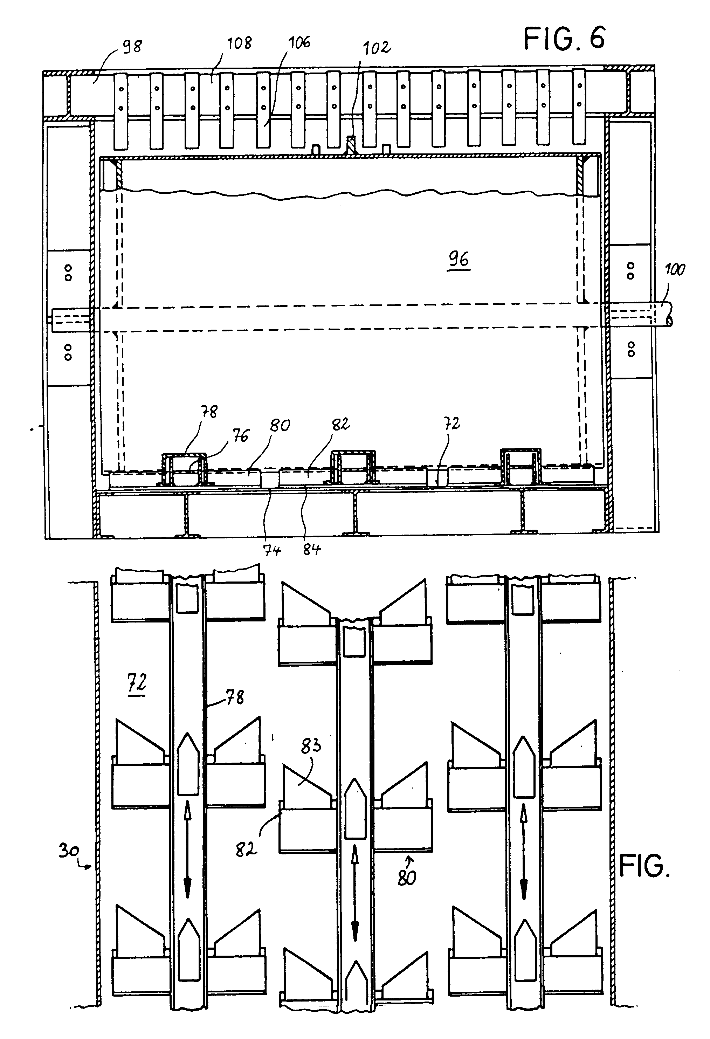

Die Aufreißtrommel 96 ist in einem Gerüst 98 aus I-Profilen um eine Welle 100 drehbar gelagert und wird durch einen Motor 118 angetrieben. Zwischen Motor und angetriebener Welle 100 befindet sich eine Rutschkupplung 116. Sie ist so eingestellt, daß bei einer Blockierung der Aufschließtrommel 96 durch einen Gegenstand die Antriebsverbindung zum Motor 118 unterbrochen wird, bevor ein mechanischer Schaden auftreten kann. Die Trommel 96 ist etwa drei Meter lang und erstreckt sich damit praktisch über die gesamte Breite des Behälters des Bunkerdosiergerätes 30, siehe Fig. 6. Der Durchmesser ihres Mantels beträgt etwa 1,90 Meter. Am Außenmantel sind auf einer Schraubenlinie insgesamt 14 trapezförmige Befestigungslaschen 102 über die gesamte Trommelbreite in gleichen Teilungswinkeln verteilt. An ihnen werden Reißzähne durch Schraubverbindung befestigt.

Diese haben an ihrer Vorder- und Rückseite eine Aufpanzerung durch Auftragsschweißung und können bei Verschleiß ihrer Vorderkante gewendet werden. Sie wirken zusammen mit einem Gatter von feststehenden Zähnen 106, die an einem Querbalken 108 des Gerüsts 98 ebenfalls lösbar und wendbar befestigt sind. Wie Fig. 6 zeigt, befinden sich die einzelnen Zähne 106 zwischen den Befestigungslaschen 102, wobei seitlich ein Freiraum von wenigen Zentimetern verbleibt. Zwischen den bewegten Reißzähnen 104 und den feststehenden Zähnen 106 findet eine Scherwirkung statt, ihr seitlicher Abstand und der Abstand des Trommelmantels vom Querbalken 108 bestimmen die Größe der Partikel, die den Reißspalt passieren können, bzw. geben die Größe vor, auf die Müllteile zerkleinert werden.

Im praktischen Betrieb dreht sich die Trommel 96 im Sinne des Pfeils 110. Hinsichtlich dieser Drehrichtung befindet sich der Querbalken 108 auf der abfallenden Seite. Dadurch wird erreicht, daß Müllteile, die von den bewegten Reißzähnen 104 nach oben über den Scheitelpunkt der Trommel 96 mitgenommen werden, nicht weiter zurückfallen, sondern zwangsweise durch das Gatter der Zähne 104, 106 hindurchtreten müssen. Es ist noch ein weiterer Querbalken 112 vorgesehen, an dem die Zähne 106 alternativ oder zusätzlich befestigt werden können. Er befindet sich näher am oberen Scheitel der Trommel 96.

Um ein Blockieren des Gatters aus den Zähnen 104, 106 zu verhindern, ist in Drehbewegung vor dem oberen Scheitelpunkt der Trommel 96 ein Abstreifer 114 angeordnet. Zwischen den bewegten Reißzähnen 104 und dem Boden 72 verbleibt ein Freiraum von etwa 3 bis 4 cm. In einer Alternative hat es sich im praktischen Betrieb als vorteilhaft erwiesen, die feststehenden Zähne 106 nicht hinter dem obersten Bewegungspunkt der Trommel 96, sondern vor diesem, beispielsweise am Abstreifer 114, auswechselbar anzuordnen. Diese Konstruktion führt zu weniger Problemen bei zur Verklemmung neigenden Teilen.

Die Vibrorinne 34 hat auswechselbare Siebe, beispielsweise mit Sieböffnungen von 22 oder 15 mm Durchmesser. Sie kann dadurch an den jeweils anfallenden Müll (Lehm, Bauschutt usw.) angepaßt werden. Sie ist insgesamt 9 Meter lang.

Für das Steigband 40, das 10 Meter lang und 1 Meter breit ist, wird ein Noppenband eingesetzt, um zu vermeiden, daß die Müllteile gegen die Förderrichtung zurückrutschen können.

Als Mulcher 52 können Shredder oder ähnliche Vorrichtungen, die ein Zerkleinern des verbliebenen Mülls durchführen, eingesetzt werden.

**Patentansprüche**

1. Abfallsortier- und -aufbereitungsanlage mit einem Bunkerdosiergerät (30, 31), einer nachgeschalteten Sortierstation (42) und einer Aufbereitungsanlage (63), bei der das Bunkerdosiergerät (30, 31) einen Behälter, eine an dem Behälterboden angeodnete Fördereinrichtung und eine Aufschließtrommel (96) hat, dadurch gekennzeichnet, daß die Fördereinrichtung drei Schubförderer aus jeweils einem in Längsrichtung des Behälters verlaufendem, sich nahezu über die gesamte Behälterlänge erstreckendem Tragteil (78) und an diesem seitlich befestigten, paarweise und in gleichen Abständen untereinander angeordneten, im Profil sägezahnförmigen Mitnehmerrippen (80) aufweist, daß jeder Schubförderer über einen Schubantrieb (86) in Längsrichtung des Behälters hin- und herbewegbar angeordnet ist, wobei die beiden äußeren Schubförderer untereinander im Gleichtakt, gegenüber dem mittleren Schubförderer aber im Gegentakt geschaltet sind, und daß die Mitnehmerrippen (80) so am Tragteil (78) angeordnet sind, daß zum Verklemmen neigende Müllteile nach oben angehoben werden.

2. Anlage nach Anspruch 1, dadurch gekennzeichnet, daß der kürzere Schenkel der im Profil sägezahnförmigen Mitnehmerrippen (80) nach vorn gerichtet ist und daß der längere, hintere Schenkel beidseitig durch jeweils einen Zahn (83) geradlinig nach vorn verlängert ist und eine außen liegende Spitze ausbildet.

3. Anlage nach Anspruch 1 oder 2, dadurch gekennzeichnet, daß die Tragteile aus U- oder Hutprofilen gefertigt sind, die auf am Behälterboden (72) befestigte Führungsprofile (56) von oben aufgelegt sind.

4. Anlage nach einem der Ansprüche 1 bis 3, dadurch gekennzeichnet, daß die Mitnehmerrippen (80) flacher sind als die Tragteile (78) und aus einem L-Profil (82) und einer Platte (84) aufgebaut sind, wobei die Platte (84) den nach unten offenen Hypotenusenbereich des L-Profils (72) abschließt und zugleich seitlich gegenüber den Schenkeln des L-Profils (82) in Behälterlängsrichtung vorsteht.

5. Anlage nach einem der Ansprüche 1 bis 4, dadurch gekennzeichnet, daß jedem Schubförderer als Schubantrieb (86) ein Hydraulikzylinder zugeordnet ist, der auf der Längsachse der Tragteile (78) angeordnet ist und mit dem zugehörigen Endbereich des Tragteils (78) sowie der vorderen Stirnwand des Bunkerdosiergerätes (30, 31) gelenkverbunden ist, und daß der Hydraulikzylinder vorzugsweise einen Durchmesser hat, der der Breite und Höhe des Profils des Tragteils (78) entspricht.

6. Anlage nach einem der Ansprüche 1 bis 5, dadurch gekennzeichnet, daß der Boden (72) des Bunkerdosiergerätes (30, 31) in einem geringen Winkel, vorzugsweise einem Winkel von 3°, in Längsrichtung gegenüber der Horizontalen geneigt angeordnet ist.

7. Anlage nach einem der Ansprüche 1 bis 6, dadurch gekennzeichnet, daß der Hub der als doppelt wirkenden Hydraulikzylinder ausgebildeten Schubantriebe (86) kleiner ist als der lichte Abstand zwischen zwei Mitnehmerrippen (80) und vorzugsweise zwei Drittel dieses Abstandes beträgt.

8. Anlage nach einem der Ansprüche 1 bis 7, dadurch gekennzeichnet, daß am Mantel der Aufreißtrommel (96) Befestigungslaschen (102) befestigt sind, an denen wendbare Reißzähne (104) befestigt sind.

9. Anlage nach einem der Ansprüche 1 bis 8, dadurch gekennzeichnet, daß die Aufreißtrommel (96) über eine Rutschkupplung (116) mit einem Motor (118) verbunden ist und in Nähe des hinteren Endbereichs des Bunkerdosiergerätes (30, 31) um eine Welle (100) drehbar gelagert ist, wobei vorzugsweise in Drehbewegung jenseits des Scheitelpunktes der Trommel (96) am Gerüst an einem Querbalken (108, 112) lösbar Zähne (106) angeordnet sind.

10. Anlage nach einem der Ansprüche 1 bis 9, dadurch gekennzeichnet, daß sich in einem Bereich zwischen dem vorderen Endbereich der Schubförderer in der ausgefahrenen Position ihres Schubantriebs (86) und der lotrechten Projektion der Aufreißtrommel (96) auf den Boden (72) eine schräg verlaufende Stufe (120) befindet und daß der Boden (72) unterhalb der Aufreißtrommel (96) um ein Maß angehoben ist, das vorzugsweise der Profilhöhe der Tragteile (78) entspricht.

## Claims

1. Plant for sorting and treating waste with a hopper metering device (30, 31), an in-line sorting station (42) and a treatment plant (63) in which case the hopper metering device (30, 31) has a container, a conveying device arranged on the base of the container and a shredding drum (96),
   **wherein** the conveying device exhibits three slide conveyors each consisting of a support element (78) progressing in the longitudinal direction of the container and extending over almost the entire length of the container, and slaving fins (80), saw-tooth shaped in profile, arranged in pairs and with equal interspacing on the said support element, and each slide conveyor is arranged movably back and forth via a slide drive (86) in the longitudinal direction of the container, whereby the two outer slide conveyors are synchronized, being asynchronous, however, in relation to the middle slide conveyor and the slaving fins (80) are so arranged on the support element (78) that items of waste that tend to jam are lifted upwards.

2. Claim according to claim 1, **wherein** the short side of the saw-tooth shaped slaving fins (80) is directed forwards and that the longer rear side is extended forwards in a straight line by one tooth (83) each constituting a tip positioned externally.

3. Plant according to claim 1 or 2, **wherein** the support elements are fabricated from U or cap profile sections which are mounted from above on guide sections (56) fastened to the container base (72).

4. Claim according to one of the claims 1 to 3, **wherein** the slaving fins (80) are flatter than the support elements (78) and are constructed from an L-section (82) and a plate (84), whereby the plate (84) closes off the hypotenuse zone of the L-section (72) which is open downwards and simultaneously protrudes laterally in relation to the sides of the L-section (82) in the longitudinal direction of the container.

5. Plant according to claims 1 to 4, **wherein** each slide conveyor is allocated as a slide drive an hydraulic cylinder (86) which is arranged on the longitudinal axis of the support elements (78) and which is connected by way of an articulated joint with the pertinent end zone of the support element (78) and the front end face of the hopper metering device (30, 31), and the hydraulic cylinder preferably has a diameter that corresponds with the width and height of the profile section of the support element (78).

6. Plant according to claims 1 to 5, **wherein** the base (72) of the hopper metering device (30, 31) is arranged at a slight angle, preferably at an angle of 3°, inclined in longitudinal direction relative to the horizontal.

7. Plant according to one of the claims 1 to 6, **wherein** the stroke of the slide drives (86), which are configured as double-acting hydraulic cylinders, is less than the clear distance between two slaving fins (80) and amounts preferably to two-thirds of this distance.

8. Plant according to one of the claims 1 to 7, **wherein** to the jacket of the shredding drum (96) are affixed fastening straps (102) to which reversable shredding teeth (104) are affixed.

9. Plant according to one of the claims 1 to 8, **wherein** the shredding drum (96) is connected via a friction clutch (116) to a motor (118) and is rotatably mounted in the vicinity of the rear end zone of the hopper metering device (30, 31) about a shaft (100), whereby teeth (106) are detachably arranged on the framework on a cross-beam (108, 112) on the other side of the crest of the drum (96), preferably with rotational movement.

10. Plant according to one of the claims 1 to 9, **wherein** a step (120) which progresses obliquely is located on the base (72) in an area between the front end zone of the slide conveyors in the extended position of their slide drive (86) and the perpendicular projection of the shredding drum (96), and the base (72) beneath the shredding drum (96) is raised by a dimension that preferably complies with the profile height of the support elements (78).

## Revendications

1. Installation de tri et de traitement des déchets avec un doseur à trémie (30, 31), une station de tri (42) en aval et une installation de traitement (63) pour laquelle le doseur à trémie (30, 31) dispose d'un conteneur, d'un dispositif de transport monté sur le fond du conteneur et d'un tambour de désagrégation (96),

caractérisée par le fait que le dispositif de transport dispose de trois convoyeurs de poussée se composant chacun d'un élément support (78) s'étirant pratiquement sur toute la longueur du conteneur et dans le sens longitudinal de ce dernier et de tirants d'entraînement (80) à profil en dents de scie fixés latéralement sur cet élément, disposés deux par deux et aux mêmes écartements, que chaque convoyeur de poussée peut effectuer un mouvement d'allée et venue dans le sens longitudinal du conteneur grâce à un entraînement de poussée (86), les deux convoyeurs de poussée extérieurs étant synchronisés entre eux mais couplés symétriquement par rapport au convoyeur de poussée central et que les tirants d'entraînement (80) sont disposés de telle manière sur l'élément support (78) que les déchets qui risquent de se coincer sont soulevés vers le haut.

2. Installation selon revendication 1 caractérisée par le fait que le côté le plus court des tirants d'entraînement (80) à profil en dents de scie est dirigé vers l'avant et que le côté arrière le plus long est prolongé des deux côtés vers l'avant en ligne droite par une dent (83) en formant une pointe dirigée vers l'extérieur.

3. Installation selon revendication 1 ou 2 caractérisée par le fait que les éléments supports sont fabriqués à partir de profilés en U ou en chape qui sont placés par le haut sur des profilés de guidage (56) fixés sur le fond du conteneur (72).

4. Installation selon l'une des revendications 1 à 3 caractérisée par le fait que les tirants d'entraînement (80) sont plus plats que les éléments supports (78) et consistent en un profité L (82) et une plaque (84), la plaque (84) terminant la section de l'hypoténuse ouverte vers le bas du profité L (72) et étant simultanément en saillie latéralement par rapport aux côtés du profité L (82) dans le sens longitudinal du conteneur.

5. Installation selon l'une des revendications 1 à 4 caractérisée par le fait que chacun des convoyeurs de poussée en tant qu'entraînement de poussée (86) dispose d'un vérin hydraulique monté sur l'axe longitudinal des éléments supports (78) qui est relié par articulation à la section finale correspondante de l'élément support (78) et à la paroi frontale avant du doseur à trémie (30, 31) et que le vérin hydraulique a de préférence un diamètre qui correspond à la largeur et à la hauteur du profilé de l'élément support (78).

6. Installation selon l'une des revendications 1 à 5 caractérisée par le fait que le fond (72) du doseur à trémie (30, 31) est incliné sur un faible angle, de préférence un angle de 3°, dans le sens longitudinal par rapport au plan horizontal.

7. Installation selon l'une des revendications 1 à 6 caractérisée par le fait que la course des entraînements de poussée (86) formés par les vérins hydrauliques à double action est inférieure à l'écartement intérieur entre deux tirants d'entraînement (80) et qu'elle s'élève de préférence à deux tiers de cet écartement.

8. Installation selon l'une des revendications 1 à 7 caractérisée par le fait que des languettes de fixation (102) sont fixées sur l'enveloppe du tambour de désagrégation (96) et que des dents d'arrachage (104) orientables sont elles-mêmes fixées sur ces languettes.

9. Installation selon l'une des revendications 1 à 8 caractérisée par le fait que le tambour de désagrégation (96) est relié à un moteur (118) par une accouplement patinant (116) et qu'il est logé de manière pivotante autour d'un arbre (100) à proximité de la section finale arrière du doseur à trémie (30, 31), des dents détachables (106) étant disposées de préférence sur une poutre transversale (108, 112) du bâti de manière à effectuer un mouvement de rotation au-delà du sommet du tambour (96).

10. Installation selon l'une des revendications 1 à 9 caractérisée par le fait qu'un échelon oblique (120) se trouve dans une zone située entre la section finale avant des convoyeurs de poussée en position sortie de leur entraînement de poussée (86) et la projection perpendiculaire des tambours de désagrégation (96) sur le fond (72) et que le fond (72) sous les tambours de désagrégation (96) est soulevé d'une cote qui correspond de préférence à la hauteur des profilés des éléments supports (78).

FIG.1

EP 0 255 061 B1

FIG.2

FIG.3

FIG.4

FIG. 5

FIG. 6

FIG.